# EUROPEAN PATENT SPECIFICATION

(11) **EP 1 541 009 B1**
(45) Date of publication and mention of the grant of the patent: **12.12.2007**
(21) Application number: 04425790.5
(22) Date of filing: 20.10.2004
(51) Int. Cl.: A01G 3/04

(54) **A multi-blade pruning machine for pruning espalier vineyards**
Mehrklingen Vorrichtung zum Schneiden von spalierten Weinstöcken
Multi-lame dispositif pour la taille des vignes palissées

(43) Date of publication of application: 15.06.2005
(73) Proprietor: V.B.C. di Cengia Vittorio e Casagrande Bruno S.N.C., 37030 Colognola ai Colli (Verona) (IT)
(72) Inventor: Cengia, Vittorio, 37042 Caldiero (Verona) (IT); Casagrande, Luca, 37042 Caldiero (Verona) (IT)
(74) Representative: Ponchiroli, Simone

(56) References cited:
- EP-A- 0 147 344
- US-A- 4 893 457

## Description

The present invention relates to a multi-blade pruning machine for pruning espalier vineyards.

These are vineyards in which the individual vines are trained to grow in a vertical plane formed by a plurality of vertical uprights driven into the ground on which horizontal wires which hold the vines are fixed.

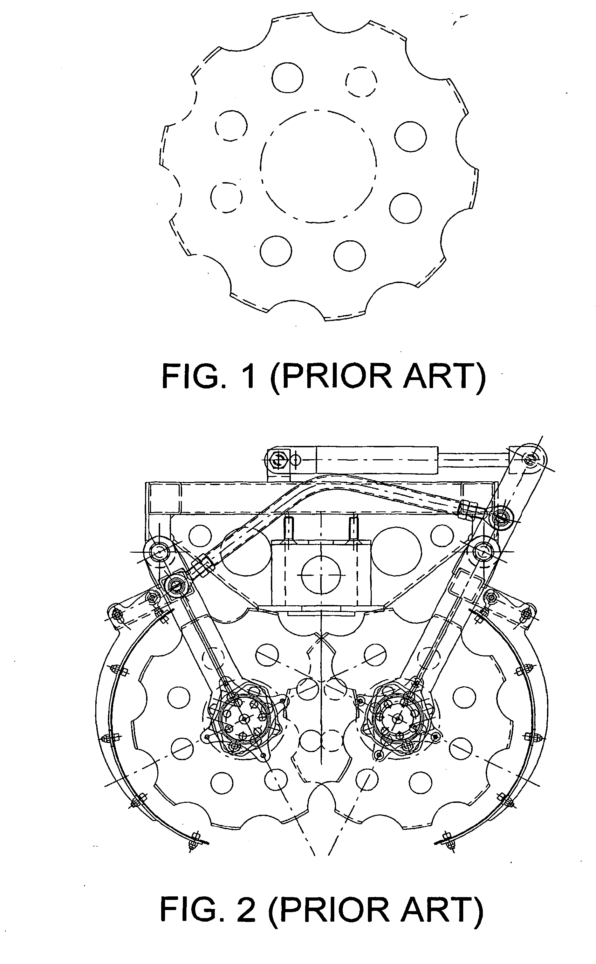

The multi-blade pruning machines known today comprise a supporting structure on which first and second cutting means are mounted (Figure 2).

The first cutting means comprise a plurality of first coaxial rotary blades distributed along a first shared, substantially vertical first axis of rotation. In turn, the second cutting means comprise a plurality of second coaxial rotary blades distributed along a second shared, substantially vertical axis of rotation.

In particular, the first and second cutting means respectively comprise a first and a second vertical motor-driven shaft on which the respective blades are keyed.

The supporting structure also allows movement of the first and second cutting means between a first position in which they are distanced in such a way that the pruning machine can be inserted on the vineyard, and a second position in which they are close to one another in such a way that the first and second blades are partially overlapping (Figure 2), so that they can perform a cutting action.

At present such blades consist of a disk with an outer profile shaped so that it has alternating teeth and recesses (Figures 1 and 2).

In particular, as illustrated in Figure 1, the outer profile of all of the teeth lies on a single circle whose centre is on the disk axis of rotation, whilst the profile of the recesses is formed by circular arcs with opposite concavity to the teeth.

The point of contact between each tooth and each recess adjacent to it forms a sharp edge in the blade profile (Figure 1).

However, this prior art has some disadvantages.

At the moment of pruning, the vineyard horizontal supporting wires are inserted between the various pruning machine blades.

In turn, the pruning machine is normally mounted on a vehicle (for example a tractor) which follows the vineyard forward along the ground.

However, the ground is not smooth and may have holes, dips, prominences, etc. Each time the vehicle encounters an irregularity in the ground, the cutting means move upwards or downwards.

Therefore the cutting blades may be pushed against the vineyard supporting wires.

When this happens, in most cases the wires are cut, whether they are made of plastic or metal.

As a result, with conventional pruning machines, to avoid cutting the vineyard supporting wires, before pruning, the wires must either be brought below the minimum cutting height or removed completely.

In this situation, the technical need which forms the basis of the present invention is to provide a multi-blade pruning machine for pruning espalier vineyards which overcomes the above-mentioned disadvantages.

In particular, the technical need of the present invention is to provide a multi-blade pruning machine for pruning espalier vineyards which allows the vineyard to be pruned without the risk of ruining the wires supporting the row of vines.

A further technical need of the present invention is to provide a multi-blade pruning machine for pruning espalier vineyards which allows pruning operations to be carried out without the need to take any action beforehand as regards the vineyard supporting wires.

The technical need specified and the aims indicated are substantially achieved by a multi-blade pruning machine for pruning espalier vineyards as described in the claims herein.

Further features and the advantages of the present invention are more clearly illustrated in the detailed description which follows, with reference to the accompanying drawings, which illustrate a preferred embodiment of a multi-blade pruning machine for pruning espalier vineyards, without limiting the scope of the inventive concept, in which:
- Figure 1 is a schematic plan view of the cutting blade of a conventional pruning machine;
- Figure 2 is a schematic plan view of a conventional pruning machine in the operating condition;
- Figure 3 is a schematic plan view of the cutting blade of a pruning machine made according to the present invention;
- Figure 4 is an enlarged view of a detail illustrated in Figure 3;
- Figure 5 is a schematic plan view, with some parts transparent and other parts cut away, of a pruning machine made according to the present invention; and
- Figure 6 is a schematic front view, with some parts cut away, of the first and the second cutting means of the pruning machine illustrated in Figure 5 reciprocally arranged in the operating condition. With reference to the accompanying drawings, the numeral 1 denotes as a whole a multi-blade pruning machine for pruning espalier vineyards according to the present invention.

The pruning machine 1 comprises a supporting structure 2 on which first and second cutting means 3, 4 are mounted, designed to act on the two faces of the vineyard.

The first cutting means 3 comprise a plurality of first coaxial rotary blades 5, distributed along a first shared, substantially vertical axis of rotation 6. In particular, in the embodiment illustrated, all of the first blades 5 are keyed on a single first shaft 7 whose rotation is driven by a first motor 8 (for example of the hydraulic type).

In turn, the second cutting means 4 comprise a plurality of second coaxial rotary blades 9 distributed along a second shared, substantially vertical axis of rotation 10. In the embodiment illustrated, the second blades 9 are also all keyed on a single second shaft 11 whose rotation is driven by a second motor 12 (for example of the hydraulic type).

The first and the second cutting means 4 are respectively mounted on a first and a second arm 13, 14 of the supporting structure 2.

As illustrated in the accompanying drawings, each shaft 7, 11 is fixed to the relative arm 13, 14 at both ends.

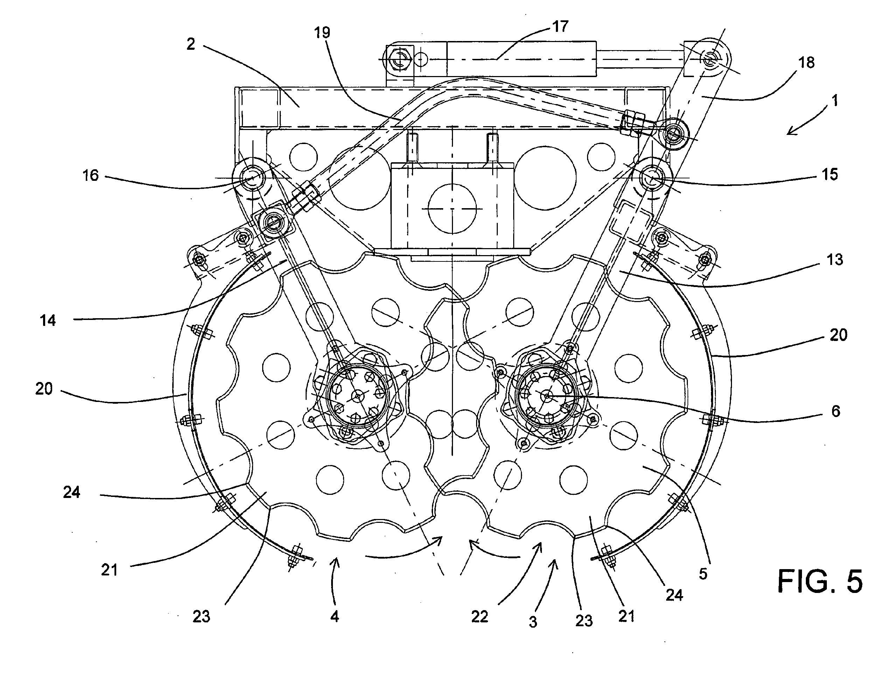

In turn, the arms 13, 14 pivot at the supporting structure 2 according to vertical axes of rotation 15, 16 and are mobile between a first position in which the first and the second cutting means 3, 4 are distanced from one another (position not illustrated), and a second position in which the cutting means 3, 4 are close to one another and the first blades 5 are vertically inserted between the second blades 9 (Figure 5).

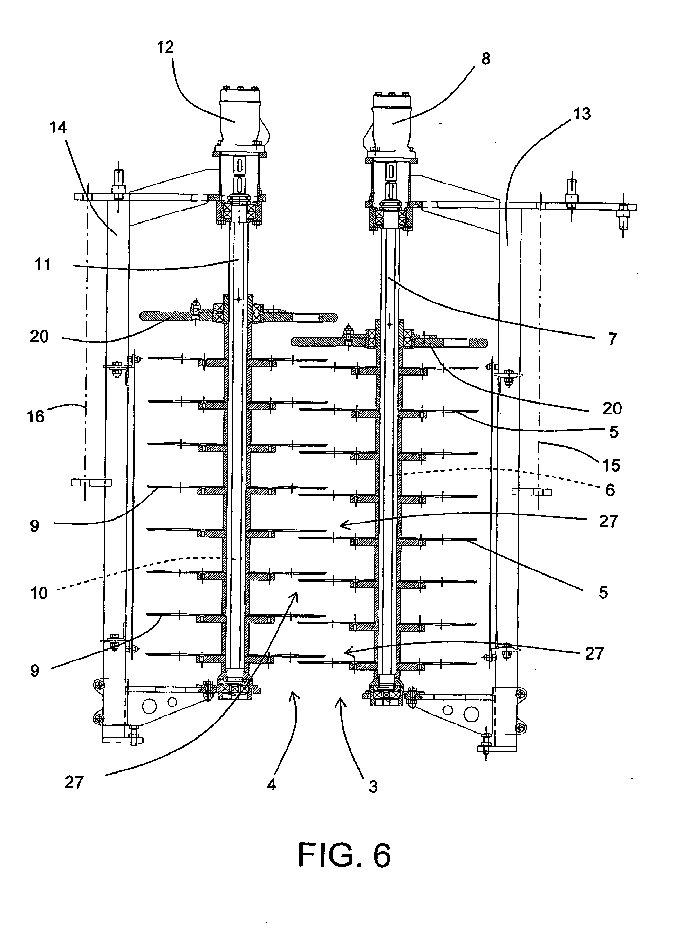

The two arms 13, 14 are illustrated, each in a side view and partly in cross-section, in Figure 6, where they are close to one another so as to also schematically illustrate the reciprocal position of the first and the second blades 5, 9 when they are in the second position.

In the embodiment illustrated, movement of the two arms 13, 14 is guaranteed by at least one hydraulic actuator 17 mounted between the supporting structure 2 and an extension 18 of the first arm 13. A rigid lever 19 (shaped for dimensional purposes) connects the first arm 13 to the second arm 14, so that the two arms 13, 14 can move in step with one another.

As illustrated in the accompanying drawings, the two arms 13, 14 may also be fitted with outer guards 20 (Figure 5 - also partly visible in Figure 6) or upper guards (Figure 6).

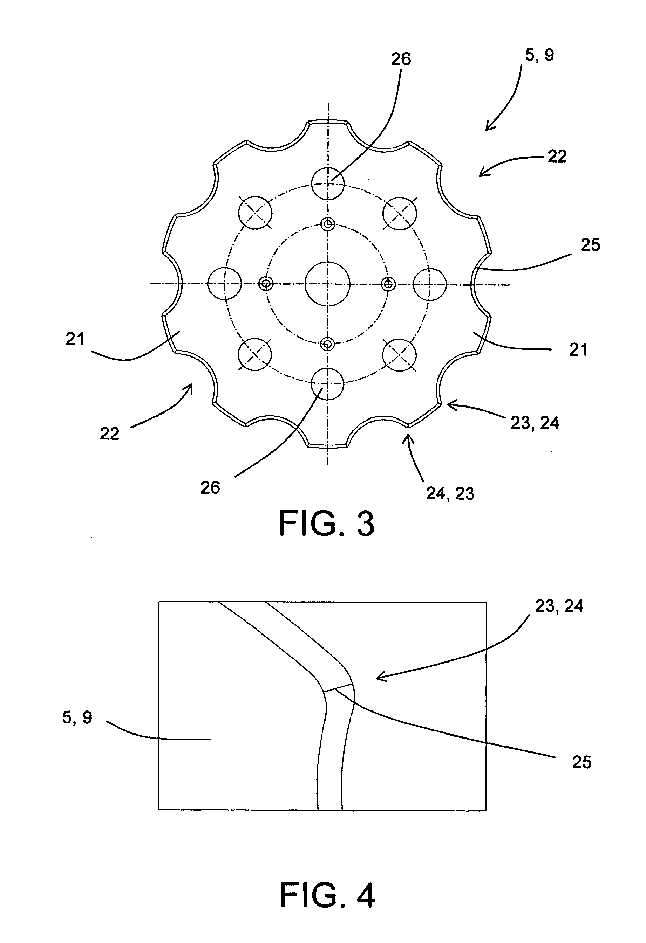

Figures 3 and 4 illustrate a blade 5, 9 of a pruning machine 1 made according to the present invention.

Each first and second blade 5, 9 has, around its circumference, along its outer edge, a plurality of teeth 21 alternating with a plurality of recesses 22.

Each tooth 21 together with each recess 22 adjacent to it forms an edge 23, 24.

Therefore, each tooth 21 forms two edges: one front edge 23, and one rear edge 24. With reference to Figure 5, the front edge 23 is that formed by the tooth 21 with the recess 22 preceding the tooth 21 in the direction of rotation of the blade 5, 9. In contrast, the rear edge 24 is that formed by the tooth 21 with the recess 22 which follows the tooth 21 in the direction of rotation of the blade 5, 9.

According to the present invention, at least the front edge 23 of each first and second blade 5, 9 is rounded. However, advantageously, both the front edges 23 and the rear edges 24 are rounded.

In the embodiment illustrated all of the teeth 21 of each blade 5, 9 have a convex outer profile which, in particular, lies in a single circle whose centre is on the axis of rotation 6, 10. The radius of this circle also corresponds to the radius of the outer circle described by the blade during rotation.

In contrast, the recesses 22 have a concave outer profile, formed, for each of them, by a circular arc.

Advantageously, the edges 23, 24 are rounded by making the edges 23, 24 in such a way that, if seen in a plan view, they form a circular arc with a rounding radius of curvature.

If the outer profile of the blade 5, 9 has a cutting edge 25 with decreasing thickness, the roundness preferably extends over the entire width of the cutting edge 25 (Figure 4).

Moreover, the rounding radius of curvature (at the outermost point of the profile) is preferably less than 5% of the measurement of the radius of the outer circle described by the blade 5, 9 during rotation.

For example, blades 5, 9 were developed with ten teeth 21 having an outer radius of 205 mm, and a rounding radius of curvature of 6 mm (that is to say, less than 3% of the measurement of the outer radius).

In the preferred embodiments of the present invention, each blade 5, 9 has between six and fourteen teeth 21, preferably between eight and twelve.

In particular, in the embodiment illustrated each first and second blade 5, 9 has ten teeth 21.

Moreover, there may be weight reduction holes 26 made in each blade 5, 9.

According to requirements the first and second blades 5, 9 may be distributed along the relative axis of rotation 6, 10 in an even or uneven (not illustrated) fashion. In the latter case the lower blades 5, 9 are preferably close together.

For example, there are embodiments with eight first blades 5 and eight second blades 9 evenly distributed and embodiments with ten first blades 5 and ten second blades 9 unevenly distributed as indicated above.

Advantageously, the first and second blades 5, 9 are arranged in such a way that, at least when they are inserted between one another, a plurality of first blade 5 - second blade 9 pairs 27 are identifiable, the blades 5, 9 of each pair 27 being close to one another (Figure 6).

The distance between the blades 5, 9 of each pair 27 may vary according to requirements. However, in the preferred embodiment the first blade 5 and the second blade 9 are less than 5 cm apart.

In particular, when the blades 5, 9 are distributed vertically in an uneven fashion, the blades 5, 9 of the lower pairs 27 may be approximately 3 cm apart and the blades 5, 9 of the upper pairs 27 may be approximately 1.5 - 2 cm apart.

Operation of the pruning machine 1 disclosed is substantially the same as that of a conventional pruning machine 1.

The first blades and the second blades 9 rotate in opposite directions to one another, so as to "bite into" the vines in front of them.

The cutting action is obtained by a "scissors" type effect applied by the two blades 5, 9 in each pair 27.

The present invention brings important advantages.

Firstly, the pruning machine disclosed can operate on vineyards without the need to make any changes to the way in which the supporting wires are arranged. Thanks to the rounding of the edges between the teeth and the recesses, even if the blade "bites into" a supporting wire due to uneven ground, the wire is not damaged but tends to pass over the blade, moving up or down a level (so that it is positioned above or below the blade).

Therefore, the pruning machine disclosed allows vineyard pruning without the risk of ruining the wires supporting the row of vines, irrespective of the condition of the ground.

In addition, thanks to the fact that the edges are rounded, the blades in each pair can be kept very close to one another, guaranteeing excellent cutting capacity.

It should also be noticed that the present invention is relatively easy to produce and that the cost linked to implementation of the invention is not very high.

The invention described may be subject to many modifications and variations, without thereby departing from the scope of the inventive concept.

All details may be substituted by other technically equivalent elements and all materials used, as well as the shapes and dimensions of the various components, may be any according to requirements.

## Claims

1. A multi-blade pruning machine for pruning espalier vineyards, comprising:
- a supporting structure (2);
- first cutting means (3) comprising a plurality of first coaxial rotary blades (5) distributed along a first shared, substantially vertical axis of rotation (6);
- second cutting means (4) comprising a plurality of second coaxial rotary blades (9) distributed along a second shared, substantially vertical axis of rotation (10);
- the first and second cutting means (3), (4) being, at least during use, close to one another so that the first and second blades (5), (9) are inserted between one another;
- each first blade and second blade (9) having, around its circumference, along its outer edge, a plurality of teeth (21) alternating with a plurality of recesses (22), each tooth (21) forming at least a front edge (23) with a recess (22) adjacent to it and in front of the tooth (21) with reference to the blade direction of rotation;
the pruning machine being **characterised in that** each front edge (23), formed by a tooth (21) and a recess (22) adjacent to it, of each of the first blades and the second blades (5), (9), is rounded.

2. The multi-blade pruning machine according to claim 1, **characterised in that** the teeth (21) have a convex outer profile.

3. The multi-blade pruning machine according to claim 1 or 2, **characterised in that** the recesses (22) have a concave outer profile.

4. The multi-blade pruning machine according to any of the foregoing claims, **characterised in that** the rounded edges (23) form, in a plan view, a circular arm with a rounding radius of curvature.

5. The multi-blade pruning machine according to claim 4, **characterised in that** the rounding radius of curvature is less than 5% of the measurement of the radius of the outer circle described by the blade (5), (9) during rotation.

6. The multi-blade pruning machine according to any of the foregoing claims, **characterised in that** each blade (5), (9) has between six and fourteen teeth (21).

7. The multi-blade pruning machine according to claim 6, **characterised in that** at least one blade (5), (9) has between eight and twelve teeth (21).

8. The multi-blade pruning machine according to claim 7, **characterised in that** at least one blade (5), (9) has ten teeth (21).

9. The multi-blade pruning machine according to any of the foregoing claims, **characterised in that** the first blades (5) are evenly distributed along the first axis of rotation (6).

10. The multi-blade pruning machine according to any of the foregoing claims, **characterised in that** the second blades (9) are evenly distributed along the second axis of rotation (10).

11. The multi-blade pruning machine according to any of the claims from 1 to 8, **characterised in that** the first blades (5) are unevenly distributed along the first axis of rotation (6), the lower blades being closer to one another.

12. The multi-blade pruning machine according to any of the claims from 1 to 8 or 11, **characterised in that** the second blades (9) are unevenly distributed along the second axis of rotation (10), the lower ones being closer to one another.

13. The multi-blade pruning machine according to any of the foregoing claims, **characterised in that**, at least when the first and second blades (5), (9) are inserted between one another, a plurality of first blade (5) - second blade (9) pairs (27) is identifiable, the blades (5), (9) of each pair (27) being close to one another.

14. The multi-blade pruning machine according to claim 13, **characterised in that** the first blade (5) and the second blade (9) of at least one pair (27) are less than 5 cm apart.

15. The multi-blade pruning machine according to claim 13 or 14, **characterised in that** the first blade (5) and the second blade (9) of at least one pair (27) are less than 2 cm apart.

16. The multi-blade pruning machine according to any of the foregoing claims, **characterised in that** it comprises eight first blades (5) and eight second blades (9).

17. The multi-blade pruning machine according to any of the claims from 1 to 16, **characterised in that** it comprises ten first blades (5) and ten second blades (9).

18. The multi-blade pruning machine according to any of the foregoing claims, **characterised in that** the first and second cutting means (3), (4) are mobile relative to one another between a first position in which they are distanced from one another, and a second position in which they are close to one another and the first blades (5) are vertically inserted between the second blades (9).

19. The multi-blade pruning machine according to any of the foregoing claims, **characterised in that** each tooth (21) also forms a rear edge (24) with a recess (22) adjacent to it and positioned behind the tooth (21) with reference to the direction of rotation of the respective blade (5), (9), the rear edges (24) of at least one blade (5), (9) being rounded.

## Patentansprüche

1. Mehrklingen-Schneidvorrichtung zum Schneiden von spalierten Weinstöcken, enthaltend:
- eine Haltestruktur (2);
- erste Schneidmittel (3), enthaltend eine Anzahl von ersten, sich koaxial drehenden Klingen (5), verteilt entlang einer ersten gemeinsamen, im wesentlichen vertikalen Drehachse (6);
- zweite Schneidmittel (4), enthaltend eine Anzahl von zweiten, sich koaxial drehenden Klingen (9), verteilt entlang einer zweiten gemeinsamen, im wesentlichen vertikalen Drehachse (10);
- wobei die ersten und zweiten Schneidmittel (3), (4) wenigstens während des Betriebes dicht aneinander liegen, so dass die ersten und zweiten Klingen (5), (9) ineinander greifen;
- wobei jede erste Klinge und zweite Klinge (9) um ihren Umfang entlang ihrer äusseren Kante eine Anzahl von Zähnen (21) hat, die sich mit einer Anzahl von Aussparungen (22) abwechseln und jeder Zahn (21) wenigstens eine vordere Kante (23) mit einer an diesen angrenzenden Aussparung (22) bildet, und zwar vor dem Zahn (21) unter Bezugnahme auf die Drehrichtung der Klinge;
wobei die Schneidvorrichtung **dadurch gekennzeichnet ist, dass** jede vordere Kante (23), gebildet durch einen Zahn (21) und eine an diesen angrenzende Aussparung (22), von jeder der ersten Klingen und der zweiten Klingen (5), (9), abgerundet ist.

2. Mehrklingen-Schneidvorrichtung nach Patentanspruch 1, **dadurch gekennzeichnet, dass** die Zähne (21) ein konvexes äusseres Profil haben.

3. Mehrklingen-Schneidvorrichtung nach Patentanspruch 1 oder 2, **dadurch gekennzeichnet, dass** die Aussparungen (22) ein konkaves äusseres Profil haben.

4. Mehrklingen-Schneidvorrichtung nach einem beliebigen der vorstehenden Patentansprüche, **dadurch gekennzeichnet, dass** die abgerundeten Kanten (23), gesehen in einer Planansicht, einen Kreisbogen mit einem gerundeten Krümmungsradius bilden.

5. Mehrklingen-Schneidvorrichtung nach Patentanspruch 4, **dadurch gekennzeichnet, dass** der gerundete Krümmungsradius geringer ist als 5% der Abmessung des Radius des äusseren Kreises, beschrieben durch die Klinge (5), (9) während der Umdrehung.

6. Mehrklingen-Schneidvorrichtung nach einem beliebigen der vorstehenden Patentansprüche, **dadurch gekennzeichnet, dass** jede Klinge (5), (9) zwischen sechs und vierzehn Zähne (21) aufweist.

7. Mehrklingen-Schneidvorrichtung nach Patenanspruch 6, **dadurch gekennzeichnet, dass** jede Klinge (5), (9) zwischen acht und zwölf Zähne (21) aufweist.

8. Mehrklingen-Schneidvorrichtung nach Patenanspruch 7, **dadurch gekennzeichnet, dass** jede Klinge (5), (9) zehn Zähne (21) aufweist.

9. Mehrklingen-Schneidvorrichtung nach einem beliebigen der vorstehenden Patentansprüche, **dadurch gekennzeichnet, dass** die ersten Klingen (5) gleichmässig entlang der ersten Drehachse (6) verteilt sind.

10. Mehrklingen-Schneidvorrichtung nach einem beliebigen der vorstehenden Patentansprüche, **dadurch gekennzeichnet, dass** die zweiten Klingen (9) gleichmässig entlang der zweiten Drehachse (10) verteilt sind.

11. Mehrklingen-Schneidvorrichtung nach einem beliebigen der vorstehenden Patentansprüche von 1 bis 8, **dadurch gekennzeichnet, dass** die ersten Klingen (5) ungleichmässig entlang der ersten Drehachse (6) verteilt sind, wobei die unteren Klingen dichter aneinander liegen.

12. Mehrklingen-Schneidvorrichtung nach einem beliebigen der vorstehenden Patentansprüche von 1 bis 8 oder 11, **dadurch gekennzeichnet, dass** die zweiten Klingen (9) ungleichmässig entlang der zweiten Drehachse (10) verteilt sind, wobei die unteren dichter aneinander liegen.

13. Mehrklingen-Schneidvorrichtung nach einem beliebigen der vorstehenden Patentansprüche, **dadurch gekennzeichnet, dass**, wenigstens wenn die ersten und zweiten Klingen (5), (9) ineinander greifen, eine Anzahl von Paaren (27) aus erster Klinge (5) - zweiter Klinge (9) beschrieben werden, wobei die Klingen (5), (9) eines jedes Paares dicht beieinander liegen.

14. Mehrklingen-Schneidvorrichtung nach Patenanspruch 13, **dadurch gekennzeichnet, dass** die erste Klinge (5) und die zweite Klinge (9) von wenigstens einem Paar (27) weniger als 5 cm voneinander abstehend sind.

15. Mehrklingen-Schneidvorrichtung nach Patenanspruch 13 oder 14, **dadurch gekennzeichnet, dass** die erste Klinge (5) und die zweite Klinge (9) von wenigstens einem Paar (27) weniger als 2 cm voneinander abstehend sind.

16. Mehrklingen-Schneidvorrichtung nach einem beliebigen der vorstehenden Patentansprüche, **dadurch gekennzeichnet, dass** sie acht erste Klingen (5) und acht zweite Klein gen (9) enthält.

17. Mehrklingen-Schneidvorrichtung nach einem beliebigen der vorstehenden Patentansprüche von 1 bis 16, **dadurch gekennzeichnet, dass** sie zehn erste Klingen (5) und zehn zweite Klingen (9) enthält.

18. Mehrklingen-Schneidvorrichtung nach einem beliebigen der vorstehenden Patentansprüche, **dadurch gekennzeichnet, dass** die ersten und zweiten Schneidmittel (3), (4) im Verhältnis zueinander beweglich sind, und zwar zwischen einer ersten Position, in welcher sie voneinander abstehend sind, und einer zweiten Position, in welcher sie dicht beieinander liegen und die ersten Klingen (5) vertikal zwischen die zweiten Klingen (9) eingeschoben sind.

19. Mehrklingen-Schneidvorrichtung nach einem beliebigen der vorstehenden Patentansprüche, **dadurch gekennzeichnet, dass** jeder Zahn (21) ebenfalls eine hintere Kante (24) mit einer an diese angrenzenden Aussparung (22) bildet, positioniert hinter dem Zahn (21) unter Bezugnahme auf die Drehrichtung der jeweiligen Klinge (5), (9), wobei die hintere Kante (24) von wenigstens einer Klinge (5), (9) abgerundet ist.

## Revendications

1. Dispositif multi-lame pour la taille des vignes palissées comprenant:
- une structure de support (2);
- des premiers moyens de taille (3) comprenant une pluralité de premières lames rotatives coaxiales (5) placées le long d'un premier axe commun de rotation (6) substantiellement vertical;
- des seconds moyens de taille (4) comprenant une pluralité de secondes lames rotative coaxiales (9) placées le long d'un second axe commun de rotation (10) substantiellement vertical;
- les premiers et seconds moyens de taille (3), (4) étant, au moins pendant l'utilisation, proches l'un de l'autre de telle sorte que les premières et secondes lames (5), (9) sont intercalées les unes aux autres;
- chaque première lame et seconde lame (9) ayant, autour de sa circonférence, le long du tranchant externe, une pluralité de dents (21) s'alternant à une pluralité de renfoncements (22), chaque dent (21) formant au moins un tranchant avant (23) avec un renfoncement (22) contigu et en face de la dent (21) en référence à la direction de rotation de la lame ; dispositif pour la taille étant **caractérisé en ce que** chaque tranchant avant (23), formé d'une dent (21) et d'un renfoncement (22) contigu, de chacune des premières lames et secondes lames (5), (9) est arrondi.

2. Dispositif multi-lame pour la taille des vignes palissées selon la revendication 1, **caractérisé en ce que** les dents (21) ont un profil externe convexe.

3. Dispositif multi-lame pour la taille des vignes palissées selon la revendication 1 ou 2, **caractérisé en ce que** les renfoncements (22) ont un profil externe concave.

4. Dispositif multi-lame pour la taille des vignes palissées selon l'une quelconque des revendications précédentes, **caractérisé en ce que** les tranchants arrondis (23) forment, vus en plan, un bras circulaire avec un rayon de courbure arrondi.

5. Dispositif multi-lame pour la taille des vignes palissées selon la revendication 4, **caractérisé en ce que** le rayon de courbure arrondi est 5% inférieur à la grandeur du rayon du cercle extérieur décrit par la lame (5), (9) pendant la rotation.

6. Dispositif multi-lame pour la taille des vignes palissées selon l'une quelconque des revendications précédentes, **caractérisé en ce que** chaque lame (5), (9) dispose de six à quatorze dents (21).

7. Dispositif multi-lame pour la taille des vignes palissées selon la revendication 6, **caractérisé en ce qu'**au moins une lame (5), (9) dispose de huit à douze dents (21).

8. Dispositif multi-lame pour la taille des vignes palissées selon la revendication 7, **caractérisé en ce qu'**au moins une lame (5), (9) dispose de 10 dents (21).

9. Dispositif multi-lame pour la taille des vignes palissées selon l'une quelconque des revendications précédentes, **caractérisé en ce que** les premières lames (5) sont régulièrement réparties le long du premier axe de rotation (6).

10. Dispositif multi-lame pour la taille des vignes palissées selon l'une quelconque des revendications précédentes, **caractérisé en ce que** les secondes lames (9) sont régulièrement réparties le long du second axe de rotation (10) .

11. Dispositif multi-lame pour la taille des vignes palissées selon l'une quelconque des revendications de 1 à 8, **caractérisé en ce que** les premières lames (5) sont irrégulièrement réparties le long du premier axe de rotation (6), les lames inférieures étant plus proches les unes des autres.

12. Dispositif multi-lame pour la taille des vignes palissées selon l'une quelconque des revendications de 1 à 8 ou 11, **caractérisé en ce que** les secondes lames (9) sont irrégulièrement réparties le long du second axe de rotation (10), les lames inférieures étant plus proches les unes des autres.

13. Dispositif multi-lame pour la taille des vignes palissées selon l'une quelconque des revendications précédentes, **caractérisé en ce que**, au moins lorsque les premières et secondes lames (5), (9) sont intercalées, une pluralité de paires (27) de premières lames (5) - secondes lames (9) est identifiable, les lames (5), (9) de chaque paire (27) étant proches l'une de l'autre.

14. Dispositif multi-lame pour la taille des vignes palissées selon la revendication 13, **caractérisé en ce que** la première lame (5) et la seconde lame (9) d'au moins une paire (27) sont situées à moins de 5 cm de distance.

15. Dispositif multi-lame pour la taille des vignes palissées selon les revendications 13 ou 14, **caractérisé en ce que** la première lame (5) et la seconde lame (9) d'une paire (27) au moins sont situées à moins de 2 cm de distance.

16. Dispositif multi-lame pour la taille des vignes palissées selon l'une quelconque des revendications précédentes, **caractérisé en ce qu'**il comprend huit premières lames (5) et huit secondes lames (9).

17. Dispositif multi-lame pour la taille des vignes palissées selon l'une quelconque des revendications de 1 à 16, **caractérisé en ce qu'**il comprend dix premières lames (5) et dix secondes lames (9).

18. Dispositif multi-lame pour la taille des vignes palissées selon l'une quelconque des revendications précédentes, **caractérisé en ce que** les premiers et seconds moyens de taille (3), (4) sont mobiles l'un par rapport à l'autre d'une première position où ils sont distants l'un de l'autre à une seconde position où ils sont proches l'un de l'autre et les premières lames (5) sont introduites verticalement entre les secondes lames (9).

19. Dispositif multi-lame pour la taille des vignes palissées selon l'une quelconque des revendications précédentes, **caractérisé en ce que** chaque dent (21) forme également un tranchant arrière (24) avec un renfoncement (22) contigu et positionné derrière la dent (21) par rapport à la direction de rotation de la lame respective (5), (9), les tranchants arrière (24) d'au moins une lame (5), (9) étant arrondis.
